Europäisches Patentamt

European Patent Office

Office européen des brevets

(19)

(11) Veröffentlichungsnummer : **0 110 360**
**B1**

(12) **EUROPÄISCHE PATENTSCHRIFT**

(45) Veröffentlichungstag der Patentschrift :
02.11.89

(51) Int. Cl.⁴ : **H 04 M 11/06**, H 04 Q 11/04,
**H 04 M 3/56**

(21) Anmeldenummer : 83111873.2

(22) Anmeldetag : 26.11.83

(54) Schaltungsanordnung zum Zusammensetzen und Trennen von Sprache und Daten bei der Übertragung über ein digitales Koppelfeld.

(30) Priorität : 30.11.82 US 445625
30.11.82 US 445626

(43) Veröffentlichungstag der Anmeldung :
13.06.84 Patentblatt 84/24

(45) Bekanntmachung des Hinweises auf die Patenterteilung : 02.11.89 Patentblatt 89/44

(84) Benannte Vertragsstaaten :
AT CH DE FR GB IT LI NL SE

(56) Entgegenhaltungen :
EP--A-- 0 058 482
GB--A-- 2 063 622
GB--A-- 2 109 199
IEEE TRANSACTIONS ON COMMUNICATIONS, Band
COM-30, Nr. 8, August 1982, Seiten 1900-1905, IEEE,
New York, US ; S. HATTORI et al. : "Integrated digital
switching system with queueing storage facility"

(73) Patentinhaber : ALCATEL N.V.
Strawinskylaan 537 (World Trade Center)
NL-1077 XX Amsterdam (NL)

(72) Erfinder : Carter, Nicholas John Robert
225 Nichols Avenue
Shelton, CT 06484 (US)
Erfinder : Middleton, Francisco Arturo
3 Deerfield Drive
Sandy Hook CT 06482 (US)
Erfinder : Das, Santanu
31 Winfield Drive
Shelton, CT 06484 (US)

(74) Vertreter : Villinger, Bernhard, Dipl.-Ing. et al
Standard Elektrik Lorenz AG Patent- und Lizenzwesen Postfach 30 09 29
D-7000 Stuttgart 30 (DE)

**Beschreibung**

Schaltungsanordnung zum Zusammensetzen und Trennen von Sprache und Daten bei der Übertragung über ein digitales Koppelfeld.

Die Erfindung betrifft eine Schaltungsanordnung zum Zusammensetzen und Trennen von Sprache und Daten bei der Übertragung über ein digitales Koppelfeld, insbesondere für Nebenstellenanlagen, wobei zwei oder mehrere Endstellen, die sich aus einer Vielzahl von Fernsprechteilnehmerendeinrichtungen und Datenendeinrichtungen zusammensetzen können, und ein Datenverarbeitungssystem an das digitale Koppelfeld angeschlossen sind.

Aus dem Stand der Technik sind eine Vielzahl von Nebenstellenanlagen, wie z. B. aus den US-Patentschriften Nr. 3 943 297 und Nr. 4 028 498 und Nr. 4 136 263 bekannt. Die erste Generation der elektronischen Nebenstellenanlagen hatte eine speicherprogrammierbare Steuerung oder elektronische Analognetzwerke. Durch das Abrufen von speziellen Codes, welche im System entschlüsselt wurden, erreichte diese Generation, im Vergleich zu herkömmlichen Systemen, einen größeren Anwendungsbereich.

Die zweite Generation der elektronischen Nebenstellenanlagen benutzten dann digitale Koppelfelder, welche als Raum-Zeit-Raumstufen oder als Zeit-Raum-Zeitstufen aufgebaut wurden, woraus sich eine erhebliche Verkleinerung ergab. Die Fernsprecheinrichtungen entwickeln sich in Richtung von Vielfachgeräten, die für den Sprachaustausch und die Datenübertragung eine digitale Datenschnittstelle erforderlich machen. Somit entwickeln sich die Fernsprecheinrichtungen in Richtung von digitalen Datenschnittstellen und die elektronischen Nebenstellenanlagen, genauso wie die Sprachnetzwerke gehen in Richtung von digitalen Koppelfeldern. Ein digitales Koppelfeld, das digitalisierte Sprache und Daten vermitteln kann, ist in der US-Patentschrift Nr. 4 201 891 von A. Lawrence et al beschrieben und gehört der Anmelderin dieser Erfindung. Die vorliegende Erfindung kann als dritte Generation der Nebenstellentechnik betrachtet werden.

Die technische Aufgabe der Schaltungsanordnung nach der Erfindung besteht darin, das Zusammensetzen und Trennen von Sprache und Daten bei der Übertragung über ein digitales Koppelfeld zu ermöglichen.

Eine erfindungsgemäße Anordnung der eingangs genannten Art besteht darin, daß die Schaltungsanordnung je Endstelle eine Übertragungsschnittstelleneinheit aufweist, die je über eine digitale Schnittstelle mit dem digitalen Koppelfeld und je mit einer Steuereinheit verbunden ist, daß das Datenverarbeitungssystem über eine weitere digitale Schnittstelle an das Koppelfeld geschaltet ist, daß in der Übertragungsschnittstelleneinheit empfangene N-Bit Datenwörter, als Halbbyte-Datenwörter, denen ein Halbbyteanzeigebit hinzugefügt ist, in einen Zeichen/Datenspeicher der digitalen Schnittstelle geschrieben werden, daß in der Übertragungsschnittstelleneinheit empfangene digitale Sprache und ein erstes aus dem Zeichen/Datenspeicher ausgelesenes Halbbyte-Datenwort in der digitalen Schnittstelle in ein Mehrbitwort eines Kanals innerhalb eines Vielkanalrahmens eingeblendet und mit den Rahmenzeitlagen des digitalen Koppelfeldes synchronisiert wird, daß je ein weiteres Halbbyte-Datenwort und digitale Sprache je in den gleichen Kanal eines folgenden Rahmens eingeblendet und synchronisiert werden, und daß diese Rahmen, die Kanäle mit Sprache und Daten enthalten, über das digitale Koppelfeld zu allen Endstellen und zu den Datenverarbeitungssystemen übertragen werden, wobei die Sprache und die Daten in den digitalen Schnittstellen ausgeblendet werden.

Ein Vorteil der Schaltungsanordnung nach der Erfindung liegt darin, daß gleichzeitig digitalisierte Sprache und digitale Daten innerhalb eines Kanals zwischen zwei oder mehreren Endstellen übertragen wird.

Ein weiterer Vorteil der Schaltungsanordnung nach der Erfindung besteht darin, daß eine Vielzahl von Endstellen gleichzeitig Sprache und Daten untereinander übertragen oder empfangen können und daß gleichzeitig auf ein Datenverarbeitungssystem zugegriffen werden kann, wobei jede Endstelle die gleichen oder unterschiedliche Daten von dem Datenverarbeitungssystem gleichzeitig über einen Tonbus empfangen kann.

Vorteilhafte Weiterbildungen sind in den Unteransprüchen gekennzeichnet.

Ein Ausführungsbeispiel wird im folgenden anhand der Zeichnungen erläutert. Es zeigen :

Figur 1 ein verallgemeinertes Blockschaltbild, in welchem für eine private Nebenstellenanlage Maßnahmen für gleichzeitige Vollduplex-Übertragung von Sprache und Daten zu Zweitor-Systembenutzern gemäß der Erfindung, erläutert sind ;

Figur 2 ein verallgemeinertes Blockschaltbild des Systems nach Figur 1, welches für die Benutzung von einer Vielzahl von Zweitor-Systembenutzern angepaßt ist ;

Figur 3 ein verallgemeinertes Blockschaltbild der Systeme nach Figur 1 und 2, welches für ein Dreitor-System erweitert ist, das mit Sprach- und Datenübertragung ausgestattet ist und Zugriff zu einem Datenverarbeitungssystem hat ;

Figur 4 ein verallgemeinertes Blockschaltbild für vier Systembenutzer, wobei jeder die Möglichkeit der Sprach- und Datenübertragung hat und über ein digitales Koppelfeld untereinander und außerdem jeder mit dem Datenverarbeitungssystem verbunden ist ;

Figur 5 ein Datenformat zum Kombinieren von digitalisierter Sprache und Daten im gleichen Kanal

2

zur gleichzeitigen Übertragung, gemäß der Erfindung ;

Figur 6 ein Blockschaltbild einer digitalen Schnittstelle, gemäß der Erfindung ;

Figur 7 eine Schieberegisteranordnung, um Datenwörter der Länge 1 Bit, in Datenwörter mit einer anderen Bitlänge zu wandeln ;

Figur 8 eine Tonbusanordnung, welche zum Gebrauch in der vorliegenden Erfindung geeignet ist ;

Figur 9 der Datenfluß für kanalgebundene Zeichengabe (CAS) im Sprachweg zwischen einen Zeichen/Datenspeicher und einer Seriell/Parallel-Datenwandlungseinheit ;

Figur 10 das Ein- und Ausblenden von Halbbytedaten zwischen einem Zeichen/Datenspeicher und einer Seriell/Parallel-Datenwandlungseinheit ; und

Figur 11 eine Zeichen/Datenspeichersteuerung geeignet für die Adressenerzeugung und Steuerung von Schreib/Lesevorgängen für die Datenübertragung in und aus dem Zeichen/Datenspeicher.

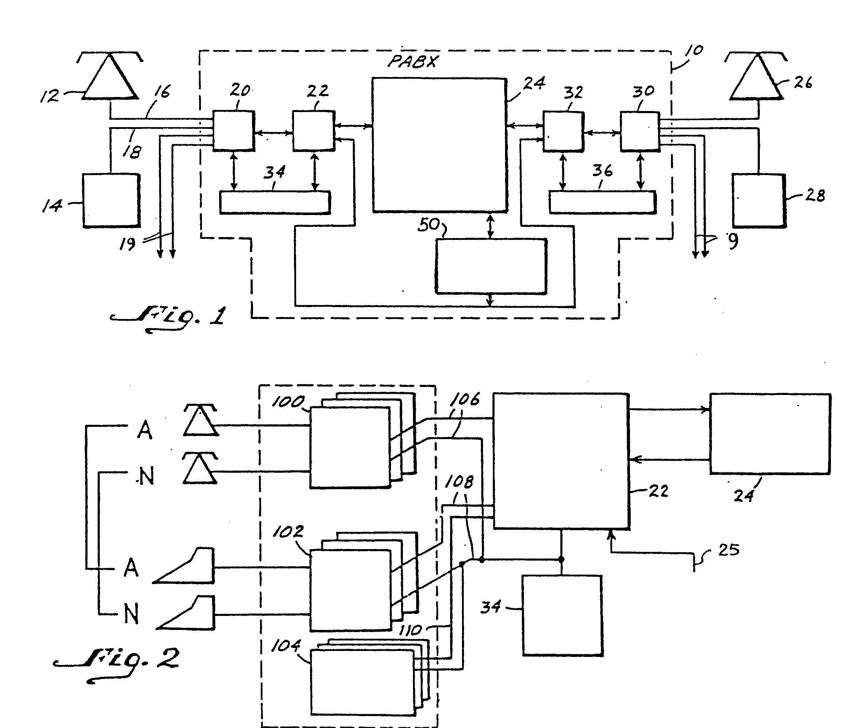

In der Figur 1 ist die gleichzeitige Übertragung von Sprache und Daten in einem Zweitor-Nachrichtensystem dargestellt. Es werden Daten und Sprache von einer Vielzahl von Daten- und Sprachendgeräten an eine private Nebenstellenanlage 10 übertragen, wobei eines dieser Sprachendgeräte als eine Fernsprechteilnehmerendeinrichtung 12 und eines dieser Datenendgeräte als Datenendeinrichtung 14 gezeigt werden. Die Fernsprechteilnehmerendeinrichtung 12 und die Datenendeinrichtung 14 sind über Zweidrahtleitungen 16 und 18 mit einer Übertragungsschnittstelleneinheit 20 mit der Nebenstellenanlage 10 verbunden, welche zum Empfangen von analoger und digitaler Information ausgelegt ist. Die Fernsprechteilnehmerendeinrichtung 12 kann ein Tastenfeld besitzen, wobei die Tastenfeldsignalisierung über die Zweidrahtleitungen 16 und 18 nach der bekannten Phantommultiplextechnik erfolgen kann, wie sie in der US-Patentanmeldung Nr. 433 335 von F. Middelton beschrieben ist.

Die Übertragungsschnittstelleneinheit 20 kann eine Teilnehmerschaltung mit den üblichen CODEC und BORSCHT-Schaltungen (battery feed, overvoltage protection, ringing, supervision, coding-decoding, hybrid balancing, testing) beinhalten, wie sie z. B. aus den US-Patentschriften Nr. 4 161 633 von R. Treiber, Nr. 4 317 963 von R. Chea, Nr. 4 270 027 von B. P. Agrawal et al und Nr. 4 272 648 von B. P. Agrawal et al bekannt sind.

Die digitalen Daten der Datenendeinrichtung 14 auf der Leitung 18 enthalten z. B. 8 Bit-Datenwörter, die im standardisierten HDB-3-Code in üblicher Weise codiert sind. Die Daten sind so angeordnet, daß man positive und negative Pulse erhält und außerdem einen Takt wiederauffinden kann. Für diesen Zweck kann ein übliches RS-232-Modem als Computerendgeräteschnittstelle benützt werden, in dem dieses Modem an jedes Ende der Zweidrahtleitung 18 geschaltet wird.

Die digitalisierte Sprache und die Daten sind an eine digitale Schnittstelle 22 angeschlossen, um eine Vollduplex-Datenübertragungsstrecke zwischen der digitalen Schnittstelle 22 ·und einem digitalen Koppelfeld 24 zur Verfügung zu stellen, wobei Halbduplexstrecken zwischen der Übertragungsschnittstelleneinheit 20 und der Datenendeinrichtung 14, sowie der Fernsprechteilnehmerendeinrichtung 12 zur Verfügung stehen. Wahlweise kann Vollduplex-Übertragung zur Nebenstellenanlage 10 in bekannter Ping-Pong-Technik, mit Echokompensationstechnik oder über 4-Drahtleitungen durchgeführt werden.

Das digitale Koppelfeld 24 enthält in vorteilhafter Weise eine Vermittlungseinheit mit verteilter Steuerung, welche detailiert in der US-Patentschrift Nr. 4 201 889 beschrieben ist. Das digitale Koppelfeld 24 verbindet die Rahmen von Kanälen, die die codierten Daten und die digitalisierte Sprache beinhalten, von jedem gewünschten Fernsprechteilnehmerendgerät oder jeder Datenendeinrichtung mit jedem anderen gewünschten Fernsprechteilnehmerendgerät oder Datenendeinrichtung.

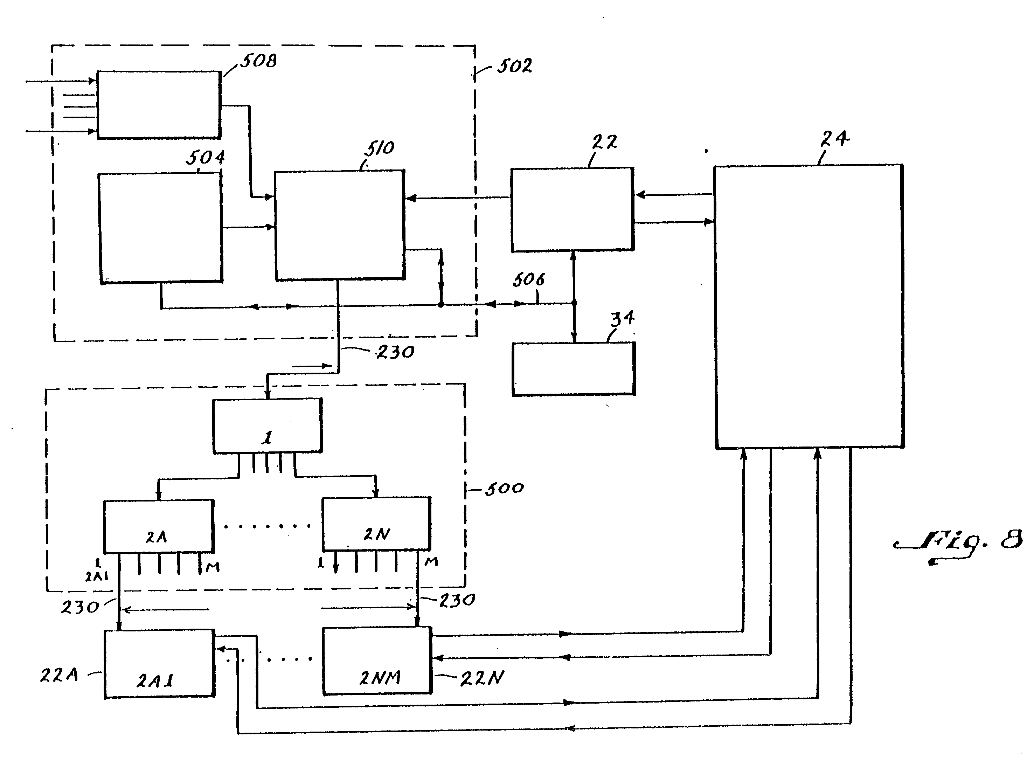

Die Figur 1 zeigt die Zusammenschaltung der Fernsprechteilnehmerendeinrichtung 12 und der Datenendeinrichtung 14 mit einer Fernsprechteilnehmerendeinrichtung 26 und einer Datenendeinrichtung 28 über das digitale Koppelfeld 24. Eine Übertragungsschnittstelleneinrichtung 30 und eine digitale Schnittstelle 32 haben die gleichen Funktionen, wie die Übertragungsschnittstelleneinheit 20 und die digitale Schnittstelle 22. Übliche Steuereinheiten 34 und 36, wie sie z. B. in der US-Patentschrift Nr. 4 201 889 beschrieben werden, bauen Übertragungswege über das Koppelfeld 24 auf und halten sie aufrecht. Außerdem enthalten die Steuereinheiten 34 und 36 Steuerfunktionen, um Befehle zwischen den digitalen Schnittstellen 22 und 32, bzw. den Teilnehmerendeinrichtungen und den Datenendeinrichtun-gen zu vermitteln. Die Möglichkeit eine Vielzahl von Fernsprechteilnehmerendeinrichtungen und Datenendeinrichtungen an die Übertragungsschnittstelleneinheiten 20 und 30 anzuschließen, wird schematisch durch weitere Leitungen 19 in der Figur 1 dargestellt. Die Steuereinheit 34 kann z. B. aus einem Mikroprozessor vom Typ Intel 8086 bestehen, der z. B. zur Erkennung von Meldezeichen und verwendeten Freizeichen eingesetzt wird, welches z. B. auch in der US-Patentschrift Nr. 4 349 703 von R. Chea beschrieben ist. Eine an dieser Stelle nicht weiter beschriebene Einheit 50 wird anhand der Figur 8 noch ausführlich erläutert.

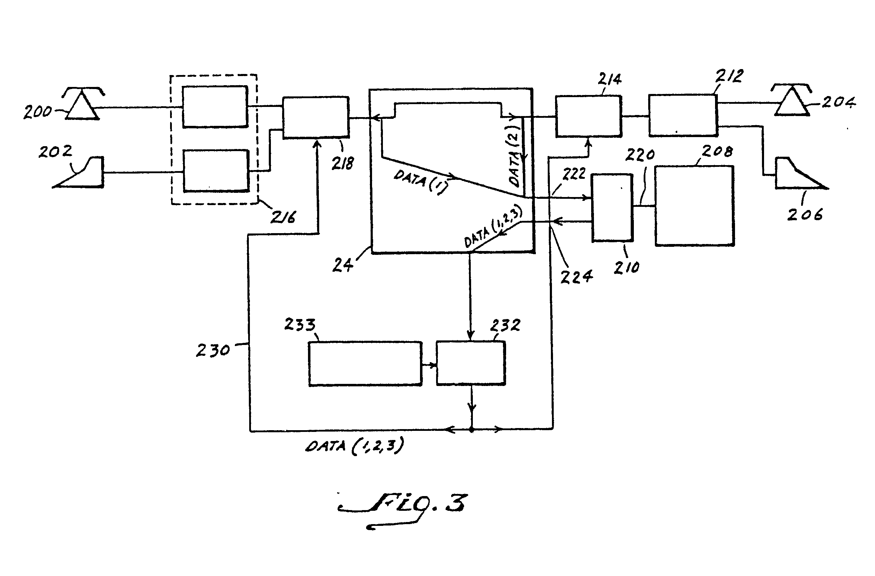

In der Figur 2 ist ein vereinfachtes Blockschaltbild für die Zusammenschaltung einer Vielzahl von Sprach- und Datenendeinrichtungen mit der in Figur 1 beschriebenen Nebenstellenanlage 10 dargestellt. An eine analoge Sprachschnittstelle 100, die ein Teil der Übertragungsschnittstelleneinheit 20 bildet, sind N Fernsprechteilnehmerendeinrichtungen (A bis N) angeschlossen. Mit der Datenschnittstelle 102, die ebenfalls ein Teil der Übertragungsschnittstelleneinrichtung 20 bildet, sind N-Datenendeinrichtungen (A bis N) verbunden. Außerdem beinhaltet die Übertragungsschnittstelleneinrichtung 20 zusätzliche Einrichtungen 104, die die bereits erwähnten Fernsprechteilnehmerschaltungen enthalten. Weiterhin gehören z. B. Rufzeichengeneratoren, wie sei z. B. in der US-Patentschrift Nr. 4 349 703 beschrieben sind, und

3

Schnittstellen für das Tastenfeld zur Steuerung und Kontrolle des Datenaustausches mit der Steuereinheit 34, zu der zusätzlichen Einrichtung 104 dazu. Es wird nur eine Ebene der Übertragungsschnittstellen 20 gezeigt, wobei jedoch die Benutzung einer Vielzahl von Ebenen in einem Koppelfeld vorstellbar und aus der bereits erwähnten US-Patentschrift Nr. 4 201 891 bekannt ist.

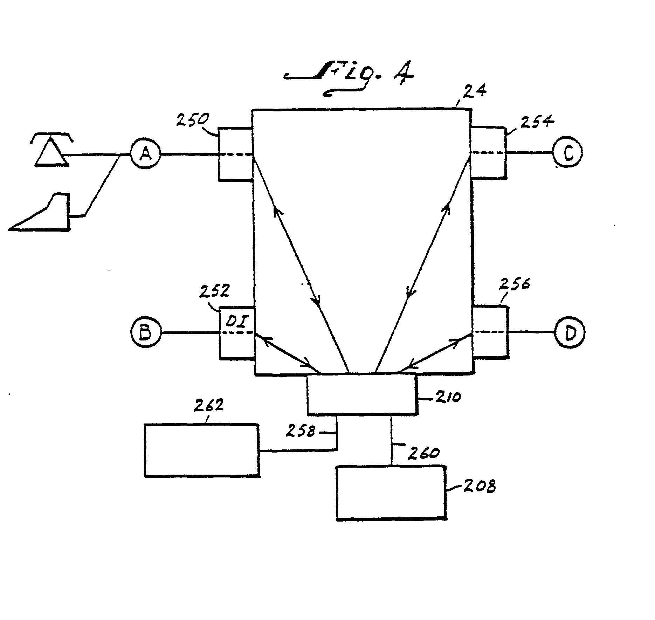

Die dargestellten pulscodemodulierten Sprach- und Datenbusse 106, 108 und 110 sind bidirektional, wobei jeder Bus zwei einseitiggerichtete Übertragungswege besitzt, die jeweils für eine Richtung des Datenflusses bestimmt sind. Jeder dieser einseitiggerichteten Übertragungswege in den Bussen 106, 108, 110 trägt, z. B. 32 Kanäle für digitale Informationen im Zeitmultiplex und mit einem seriellen Bitformat. Die einzelnen Rahmen im Zeitmultiplexformat bestehen aus 32 Kanälen, wobei jeder Kanal z. B. 16 Bit Informationen bei einer Übertragungsgeschwindigkeit von 4.096 Mbit/s aufweist. Die PCM-Sprach- und Datenbusse 106 und 108 sind an die digitale Schnittstelle 22 angeschlossen und dort wird, wie noch beschrieben wird, Sprache und Daten zur gleichzeitigen Übertragung über das Koppelfeld 24 zusammengesetzt. Die Tastenfeldschnittstelle 104 wird über den Übertragungsweg 110 an die digitale Schnittstelle 22 geschaltet. Die Steuereinheiten 34 und 36 führen, wie zuvor erwähnt, den Wegeaufbau über das Koppelfeld 24 durch. Über eine weitere Verbindung 25 ist die noch zu beschreibende Einheit 50 an die digitale Schnittstelle 22 angeschlossen. In der Figur 3 ist ein 3-Torsystem abgebildet, in dem ein Sprach- oder Datensystembenutzer am Tor 1, der über eine Teilnehmerendeinrichtung 200 und eine Datenendeinrichtung 202 verfügt, wahlweise über das Tor 2 oder das Tor 3 Nachrichten austauschen kann. Dem Tor 2 ist ein weiterer Sprach- und Datensystembenutzer zugeordnet, der eine Teilnehmerendeinrichtung 204 und eine Datenendeinrichtung 206 besitzt. An dem Tor 3 liegt eine Datenverarbeitungseinrichtung, die sich aus einem Datenverarbeitungssystem 208 und einer Datenschnittstelle 210 zusammensetzt. Das Datenverarbeitungssystem 208 kann Endgeräte enthalten, wie z. B. eine speicherprogrammierte Einheit, die Daten gespeichert hat, welche die Benutzer am Tor 1 oder Tor 2 wiederfinden können. Die Datenschnittstelle 210 enthält Funktionen, um den Datenstrom direkt mit den PCM-Kanälen zu verbinden. Sie besteht aus einer digitalen Schnittstelle, die der digitalen Schnittstelle 22 entspricht, welche noch beschrieben wird.

Über das Tor 2 ist, ähnlich wie zuvor beschrieben eine Übertragungsschnittstelle 212 und eine digitale Schnittstelle 214 mit dem Koppelfeld 24 verbunden. Weiterhin ist über das Tor 1 das Koppelfeld 24 mit einer Übertragungsschnittstelle 216 und mit einer digitalen Schnittstelle 218 verschaltet. Das 3-Torsystem in Figur 3 ist ein Vollduplexsystem, indem beide Teilnehmerendeinrichtungen 200 und 204 eine gleichzeitige Sprachverbindung und gemeinsamen Dialogbetrieb über ihre Datenendeinrichtungen 202 und 206 bzw. mit dem Datenverarbeitungssystem 208 führen können. Gemäß einem erfindungsgemäßen Merkmal der vorliegenden Erfindung können beide Teilnehmereinheiten 202 und 206, wie folgt arbeiten. Sie können mit dem gemeinsamen Datenverarbeitungssystem 208 Daten austauschen, so daß jeder die gleichen Daten zurückgeschickt bekommt, sogar wenn jede Teilnehmerendeinrichtung verschiedene Daten überträgt oder aber können sie verschiedene Daten von dem Datenverarbeitungssystem 208 zurückübertragen bekommen. Hierfür ist die Leitung 220 als sehr schneller paralleler Datenbus ausgelegt. Die digitale Schnittstelle 210 führt eine Seriell/Parallel-Wandlung, eine Kanalbelegung und eine Synchronisation für zwei PCM-Zwischenleitungen 222 und 224 mit z. B. jeweils 32 Kanälen durch. Das Übertragen von digitaler Information von einem 1-Tor zu Mehrtoren ist bekannt und wird z. B. detailliert in der US-Patentschrift Nr. 4 293 946 von M. Kuras et al beschrieben.

Die Figur 3 veranschaulicht, das Übertragen von Daten und digitalisierter Sprache über das Koppelfeld 24 von den Toren 1 und 2 zu dem Datenverarbeitungssystem 208 über das Tor 3. Obwohl das Senden von Sprache oder Daten zu einem Mehrtor in einem Sprachfeld bekannt ist, z. B. US-Patentschrift Nr. 4 293 964 von M. Kuras et al, verbleibt das Problem, Daten mit der Anzahl Bits zusammenzusetzen, (z. B. 5 Bit), mit der sie benutzt werden. Folglich muß es möglich sein, digitalisierte Sprache vom Tor 1 zum Tor 2, und Daten vom Tor 1 zum Tor 3 zu bringen. Dies wird dadurch erreicht, daß ein einziges Datenwort übertragen wird, welches beides, digitalisierte Sprache und Daten in einem kombinierten Informationsfeld für beide Bestimmungsorte enthält (Tor 2 und Tor 3). An der digitalen Schnittstelle 214 wird nur die Sprache wiedergewonnen und die Daten werden nicht beachtet. Die digitale Schnittstelle 210 am Tor 3 hingegen gewinnt nur die Daten und läßt die Sprache außer Acht. Ebenso wird die gleiche Technik verwendet, um Sprache und Daten vom Tor 2 zum Tor 1 bzw. Tor 3 zu übertragen. Mit Kenntnis des bisherigen Standes der Technik war es nicht möglich, die Daten vom Tor 3 (dem Datenverarbeitungssystem 208) zu den beiden Toren 1 und 2 so zurückzusenden, daß sie zu den gleichen Endgeräten gelangten, die sie auch zuvor übertragen hatten. Die 16-Bit breite PCM-Information kann in der oben beschriebenen Weise übertragen werden, wobei nur 30 % der verfügbaren Bandbreite und ein anderer verfügbarer Sprachkanal zu Tor 1, 2 benützt werden. Somit ist ein zusätzliches Mittel zum zusammensetzen und Übertragen erforderlich. Es hat sich herausgestellt, daß der schon vorhandene Tonbus einer Fernsprechnebenstellenanlage zu diesem Zwecke dienlich ist. Im anderen Falle muß ein separater Übertragungsbus allein für diesen Zweck ausgestattet sein, der zusätzlich zu dem bereits vorhandenen Tonverteilungsverfahren in der Nebenstellenanlage existiert, selbst wenn dieses Tonverteilungsverfahren von ähnlicher Art und Weise, wie der separate Bus aufgebaut ist. Der Tonbus 230, z. B. eine 32-Kanal PCM-Übertragungsleitung, kann zwischen jeder digitalen Schnittstelle 218 und 214 von jedem Fernsprechteilnehmertor, wie Tor 1 und Tor 2, verlaufen. Üblicherweise wird ein Tonbus in einem Fernsprechteilnehmernetz dazu benutzt, um niederfrequente Töne, wie z. B. Ruftöne, Besetztzeichen, usw., zu vermitteln, so daß der Fernsprechteilnehmer diese Töne über den Tonbus hört. Da jeder Fernsprechteilnehmer immer mit dem Tonbus 230 verbunden ist, d. h. jeder der 32 Kanäle auf dem Tonbus 230 kann mit jedem Fernsprechteilnehmer verbunden werden, können beide Fernsprechteilnehmer am Tor 1 und Tor 2 in jeden der 32 Kanäle von Tor 3 angeschlossen werden.

Für den Fall, daß die Fernsprechteilnehmer am Tor 1 und Tor 2 unterschiedliche Daten vom Tor 3 benötigen, können diese Daten einfach über den Tonbus 230 in verschiedenen Kanälen des 32 Kanal PCM-Rahmens übertragen werden. In der Figur 3 ist die Tonschnittstelleneinheit 232 und der Tongenerator 233 dargestellt. Dabei ist der für das Fernsprechen bekannte Stand der Technik über Tongeneratoren und über die Übertragung von Tönen für das Verständnis der vorliegenden Erfindung ausreichend. In Figur 8 ist hierzu eine geeignete Tonbus-Anordnung gezeigt. Da die Datenschnittstelle 210 ähnlich wie die digitalen Schnittstellen 214 und 218 aufgebaut sein kann, sei vereinbart, da nur die Möglichkeit des Ein- und Ausblendens der Daten benötigt wird, daß die digitale Datenschnittstelle 210 des Datenverarbeitungssystems 208 aus jeder bekannten Ein- und Ausblendeinheit zusammengesetzt sein kann.

In Figur 4 ist ein vereinfachtes Blockschaltbild, welches die Verbindung von vier individuellen Systembenutzern A, B, C und D, die je eine Sprach- und Datenendeinrichtung besitzen, mit dem Datenverarbeitungssystem 208 gezeigt. Eine Vielzahl von Rahmen, die Kanäle mit PCM-Sprache und PCM-Daten enthalten, werden über das digitale Koppelfeld 24 vermittelt.

Die Sprache und die Daten der Systembenutzer A, B, C und D werden in digitalen Schnittstellen 250, 252, 254 und 256 in digitale Wörter, entsprechend der Sprache und der Daten, gewandelt, zusammengesetzt und durch die digitale Datenschnittstelle 210 auf die zwei Busse 258 und 260 verteilt. Dabei ist der Bus 258 für digitalisierte Sprache und der Bus 260 für digitale Daten vorgesehen. Der Bus 258 verbindet die Systembenutzer A, B, C und D mit einer Konferenzeinheit 262, um eine gleichzeitige Sprachverbindung zu allen Benutzern zu ermöglichen. Die Konferenzeinheit 262 kann dabei z. B. aus der in der bereits erwähnten US-Patentschrift Nr. 4 293 946 von M. Kuras et al beschriebenen Konferenzeinheit gebildet werden. Der Datenbus 260 verbindet gleichzeitig sämtliche Benutzer mit dem Datenverarbeitungssystem 208, so daß individuell Daten zu dem Datenverarbeitungssystem 208 gesendet und dort wiedergefunden werden können. Dabei können diese wiedergefundenen Daten gemeinsam an einige oder an alle Benutzer gesendet oder es können verschiedene Daten an alle Benutzer gesendet werden. Das Datenverarbeitungssystem 208 kann mit einem Intelrechner 8086 oder einem IBM-Rechner 370, abhängig von dem benötigten Datenumfang des Benutzers, realisiert werden. Dabei ergeben sich als typische Aufgaben des Rechners das Handhaben und Berechnen von Datenmustern oder Zahlen.

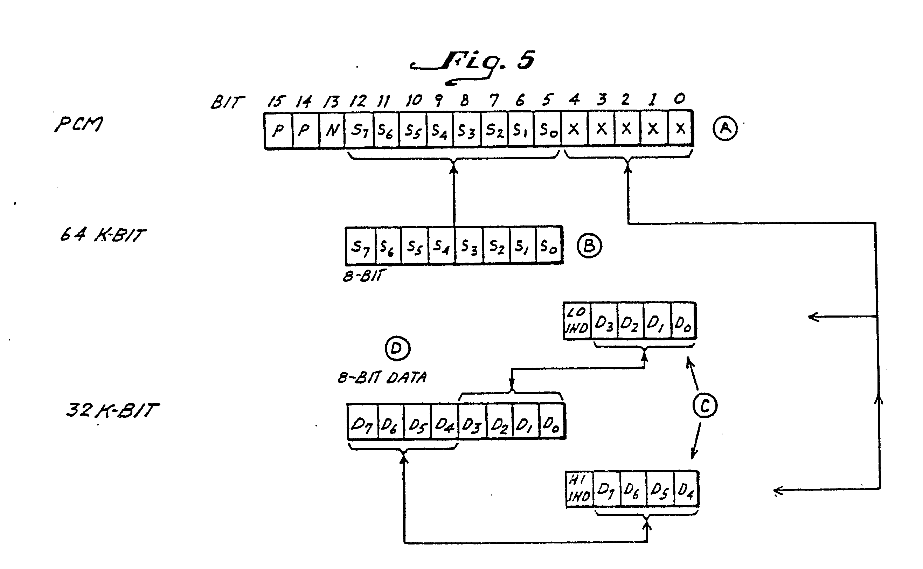

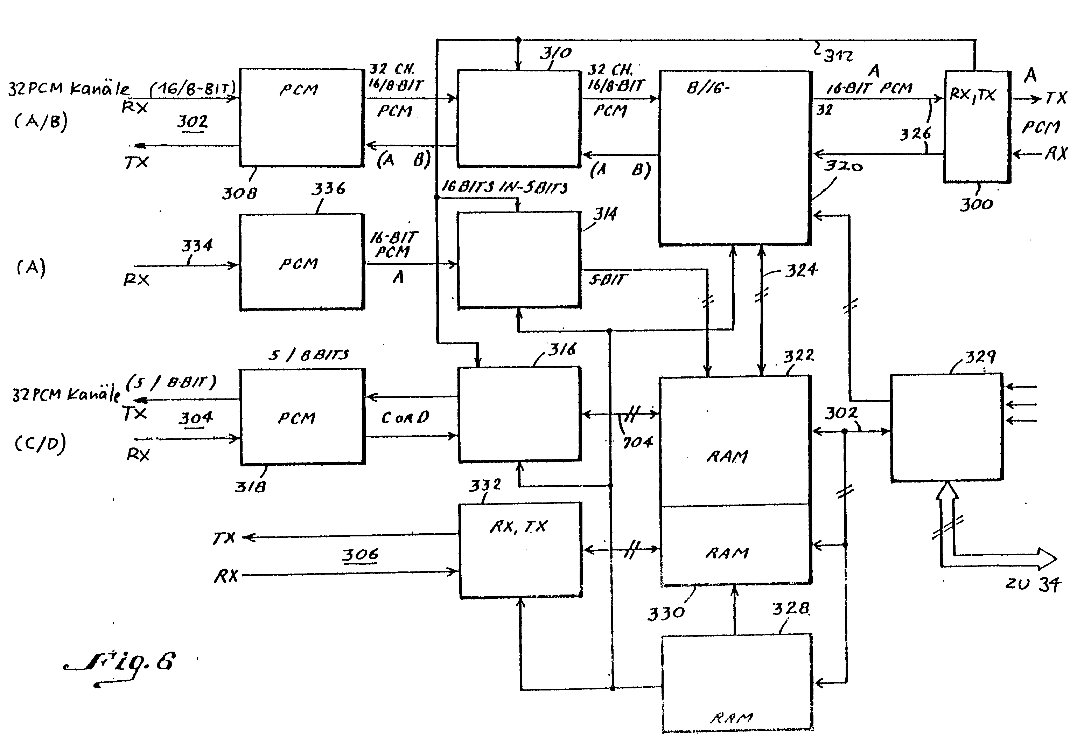

Es wird nun das in Figur 5 gezeigte Datenformat erklärt, welches wie in dem Blockschaltbild für die digitale Schnittstelle (Figur 6) dargestellt, gleichzeitige Sprach- und Datenübertragung ermöglicht. Das Format A zeigt das gewöhnlich benutzte 16-Bit-Format für das Fernsprechen, welches den Inhalt eines von 32 PCM-Kanälen eines Datenrahmens darstellt. Die einzelnen Bits werden wie folgt bezeichnet:

P = Protokoll, 2-Bit
N = Reserve, 1-Bit
S = Sprache, 8-Bit
X = Daten, 5-Bit

Die Protokollbits P des beschriebenen Systems können dabei einem « SPATA-Protokoll » entsprechen (vgl. US-Patentschrift N4. 4 201 891 von A. Lawrence et al). Die Übertragungsgeschwindigkeit ist typischerweise 4.096 Mbit/s.

Das Format B zeigt eine 8 Bit breite digitale Sprachprobe für ein Wort eines Kanales im Format A. Diese 8 Bit sind die digitale Darstellung einer analogen Sprachprobe und werden entweder in alle Rahmen der Kanäle eingefügt oder ausgeblendet. Die Sprachproben sind ein- oder ausgeblendet, wenn die Schnittstelle zwischen der Sprachübertragungsschnittstelle und der digitalen Schnittstelle 8 Bit mal 32 Kanäle pro Rahmen beträgt. Wenn der PCM-Sprachbus 106 in Figur 2 16 Bit Wörter beinhaltet, brauchen die Sprachproben nicht ein- oder ausgebledet werden. Die Sprachproben können jedoch leichter an der Sprachschnittstelle 100 auf anschlußindividueller Basis ein- und ausgeblendet werden, wie dies z. B. in der bereits erwähnten US-Patentschrift Nr. 4 201 891 beschrieben ist. Die Sprachübertragungsgeschwindigkeit, welche aus 8K Rahmen/s und 8 Bit/Kanal und Rahmen abgeleitet ist, beträgt 64 Kbit/s.

Das Format C zeigt zwei 5 Bit Datenwörter, die abwechselnd in das Datenfeld des 16 Bit A-Formates (X-Bit) eingefügt werden. Hierbei sind die ersten vier Bit eines 5 Bit Datenfeldes gültige Daten und das zusätzliche Bit dient zur Anzeige, welche der ein- oder ausgeblendeten, geraden oder ungeraden Anteile des Formates C im Format D dargestellt sind. Das zusätzliche Bit, welches entweder den Wert 1 oder 0 annimmt, wird manchmal als « Halbbyteanzeige » bezeichnet. Dabei haben jede 4 Bit Daten, im folgenden Halbbyte gekannt, eines 8 Bit Datenwortes (Format D) entgegengesetzte Halbbyteanzeigen, d. h. daß die Halbbyteanzeigen niemals gleichzeitig den Wert 0 oder 1 annehmen.

Somit wird das fünfte Bit eines jeden Halbbytes des Formates D als Rahmen für die zwei Halbbytes innerhalb eines 8 Bit Datenwortes des Formates D benutzt. Das Datenwort des Formates D hat eine Übertragungsgeschwindigkeit von 32 Kbit/s. Für zusammengesetzte Felder werden die Abtastwerte mit dem Format C zum Übertragen über das digitale Koppelfeld 24 eingeblendet und für getrennte Felder werden die Abtastwerte mit dem Format C bei dem Empfang aus dem digitalen Koppelfeld 24 ausgeblendet.

In der Figur 6 ist die digitale Schnittstelle 22 dargestellt. Die Rahmen der PCM-Kanäle für Sprache und Daten im Format A (vgl. Fig. 5) werden von dem digitalen Koppelfeld 24 über die Leitungen Tx und Rx, welche an einem Synchronisationsdemodulator und Zwischenspeicher 300 angeschlossen sind, gesendet und empfangen. Der PCM-Eingang vom Koppelfeld 24 wird zum Resynchronisieren aller anderen Eingänge der digitalen Schnittstelle 22 benutzt. Somit erfolgt das Ein- und Ausblenden von Daten synchron mit einem vom digitalen Koppelfeld 24 empfangenen Rahmen- und Kanalsynchronisationssignal. Es existiert also eine feste Zeitbeziehung zwischen dem Eingang des Koppelfeldes 24, den Operationen der digitalen Schnittstelle 22 und der Übertragung über Leitungen/Zwischenleitungen zu den Benutzern und über die Übertragungsschnittstelle 20 zu den Leitungen 302 (Sprachbus), Leitungen 304 (Datenbus) und zu den Leitungen 306 (Tastenfeldanwendungen). Die 8 Bit PCM-Daten im A-oder B-Format, die von dem an die Benutzerendgeräte angeschlossenen Sprachbus 302 kommen, werden in einem Zwischenspeicher 308 zwischengespeichert und in 32 Kanälen mit dem Format A oder B mit einem Synchronisierspeicher mit wahlfreiem Zugriff (RAM) 310 verbunden, um eine Synchronisation mit dem Datenrahmensynchronsignal des Koppelfeldes 24 zu erlangen. Das Datenrahmensynchronsignal wird von dem Zwischenspeicher 300 über eine Leitung 312 an den Synchronisierspeicher 310, an eine Synchronisier- und Daten/Ton-Trennungseinheit (RAM) 314 und an ein Synchronisierspeicher 316 gelegt.

In die Synchronisierspeicher wird Information, rahmensynchron mit den empfangenen Daten von den Leitungen, eingeschrieben. Auf diese Information wird synchron mit einem internen Takt der digitalen Schnittstelle 22 zugegriffen und synchron ausgelesen. Jeder Synchronisierspeicher besitzt einen Adressenzähler (nicht näher dargestellt), der nach jeder Kanalzeitlage, Kanal N, N + 1, N + 2, ..., inkrementiert wird, so daß die aufeinanderfolgenden Bytes (8 Bit) in aufeinanderfolgende Speicherzellen geschrieben werden. Der Adressenzähler zählt von 0 bis 31 und beginnt dann wieder mit gleicher Frequenz, aber unterschiedlicher Phase von 0 bis 31 hochzuzählen. Dabei zählt der Adressenzähler für eine serielle 8 Bit Adresse mit 2.048 Mbit/s Datenübertragungsgeschwindigkeit mit einer Zählgeschwindigkeit von 256 Kbit/s. Eine hier nicht näher dargestellte Logik initialisiert und synchronisiert den Adressenzähler mit dem Rahmentakt des A- oder B-Formates.

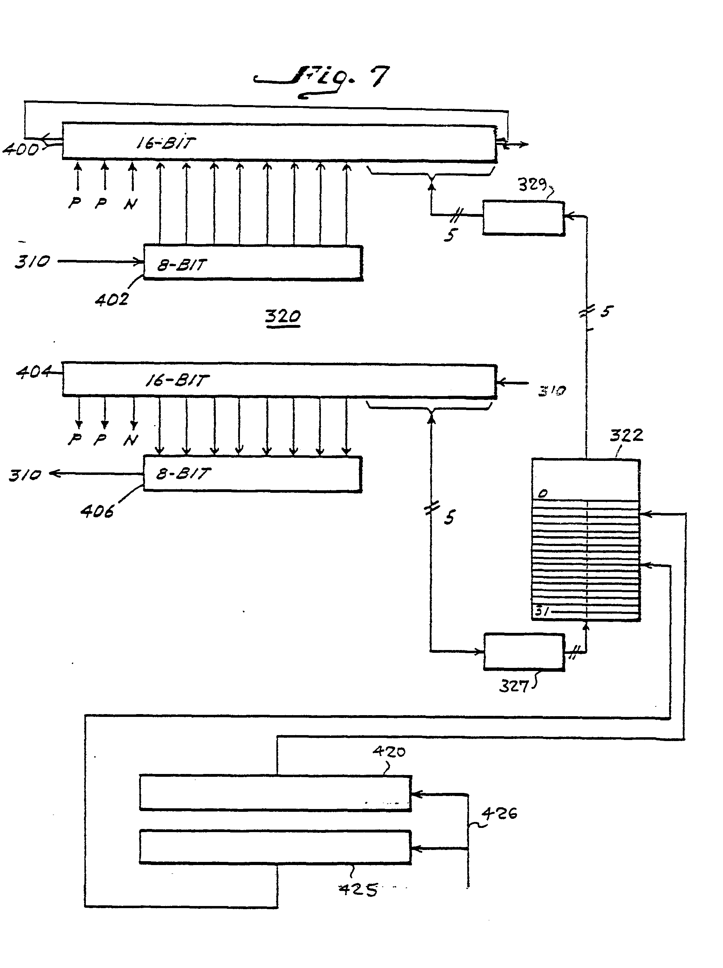

Die 8 Bit breite PCM-Sprache wird in ein 16 Bit breites Feld eingefügt, um das Übertragungsformat für die Vermittlung zu erhalten. Dies wird durch eine 8/16 Bit-Wandlung in einer 8/16 Bit-Wandlereinheit 320 (vgl. Fig. 7) durchgeführt. Eine kanalgebundene Zeichengabe (CAS) oder Daten werden dem 16 Bit Kanal zugeordnet, in dem sie aus einem Zeichen/Datenspeicher (CAS/DATA RAM) 322 ausgelesen und in den PCM-Wortstrom zusätzlich zu dem Sprachfeld eingefügt werden. Zur Benutzung der kanalgebundenen zeichengabe (CAS) werden die Zeichen aus dem Sprachfeld ein- und ausgeblendet. Diese, die Zeichen enthaltenden 16 Bit Wörter werden über eine Leitung 324, die 8/16 Bit-Wandlereinheit 320 und über Leitungen 326 mit 16 Bit/Kanal zum digitalen Koppelfeld 24 übertragen.

Der Zeichenspeicher des Zeichen/Datenspeichers 322 ist 8 Bit breit und besitzt 128 Speicherzellen zu je 8 Bit (eine pro Kanal). Der Datenspeicher des Zeichen/Datenspeichers 322 besteht aus 128 Speicherzellen mit je 4 Bit Kapazität. Die Funktion des Zeichenspeichers im Zeichen/Datenspeicher 322 wird später erläutert. Die Daten im Datenspeicher 322 werden je als Hälfte eines Wortes gleichzeitig ausgelesen. Dieser Hälfte wird beim Auslesen ein Anzeigebit hinzugefügt, welches von einem hier nicht dargestellten Adressenzählers, der an den Zeichen/Datenspeicher 322 angeschlossen ist, bestimmt wird und welcher seine Eingangsignale von einer Adressenerzeugungs- und Schreib-/Lese-Steuereinheit 328 empfängt. Der Adressenzähler zählt zyklisch jede Kanalzeitlage, d. h. er zählt von Kanal 0 bis Kanal 31 und beginnt dann wieder bei Kanal 0, woraus sich jeweils die für jeden Kanal entsprechende Adresse für den Zeichen/Datenspeicher 322 ergibt. Auf die, der jeweiligen Kanaladresse entsprechenden Speicherzelle, wird zugegriffen und die Daten werden gelesen und in den Speicher eingefügt. Die Einheit 328 empfängt und speichert ein Datenmuster, das von der Steuereinheit 34 übertragen wird und das beim Wiederauslesen in die Einheit 328, das Schreiben/Lesen von Daten für den Datenspeicher des Zeichen/Datenspeichers 322 über eine Basis von Kanälen der verschiedenen Quellen ermöglicht. Ein Tastenfeldspeicher mit variablem Zugriff 330, der ähnlich wie der Zeichen/Datenspeicher 322 aufgebaut ist, enthält 2 bis 2N Speicherwortplätze (Voraussetzung sind getrennte Übertragungs- (Tx) und Empfangsspeicherplätze (Rx)), wobei sich die Anzahl N in Abhängigkeit der Kanäle N für die Daten ergibt, die zu dem Tastenfeld gesendet werden. Der Tastenfeldsynchronisier- und Zwischenspeicher 332, sowie die Synchronisierspeicher 314, 316 und die 8/16 Bit-Wandlereinheit 320 sind an der Schreib/Lesesteuereinheit 328 angeschlossen. Die Daten, die von dem Tastenfeld gesendet/empfangen werden sollen, werden aus dem Tastfeldspeicher 330 gelesen oder in den Tastenfeldspeicher 330 geschrieben. Diese Funktionen werden von der Steuereinheit 34, die über eine parallel Steuerschnittstelle, eine Logiksteuereinheit 329 und der Leitung 302 mit dem Tastenfeldspeicher 330 verbunden ist, gesteuert. In ähnlicher Weise steuert die Steuereinheit 34 die Schreib/Lesevorgänge des Zeichenspeichers im Zeichen/Datenspeicher 322.

Die Daten im C- oder D-Format gelangen über den Datenbus 304 und einen Zwischenspeicher 318 in den Synchronisierspeicher 316. Dabei werden die Daten auf den Datenbus 304 in aufeinanderfolgenden Kanälen empfangen, in denen die Daten in 5 Bit-Feldern oder 8 Bit-Feldern eingeschlossen sind und die eine effektive Bitübertragungsgeschwindigkeit von 32 Kbit/s und pro Kanal haben. Wenn die auf dem Datenbus 304 empfangenen Datenfelder eine 8 Bit-Länge besitzen, werden sie in 5 Bit-Felder, die ein Halbbyteanzeigebit enthalten, umgewandelt. Wenn die Datenfelder eine 5 Bit-Länge aufweisen, beinhalten sie bereits das Halbbyteanzeigebit. Dann werden die Daten in den Synchronisierspeicher 316 mit dem Rahmensynchronisiersignal synchronisiert und in den Zeichen/Datenspeicher 322 als 4 Bit-Feld geschrieben, wobei das Halbbyteanzeigebit eine gerade oder ungerade Adresse im Datenspeicher 322 festlegt.

Bisher wurde. die Übertragung zum Koppelfeld und das Einblenden von Daten inklusive der gleichzeitigen Übertragung von Daten, die während der vorangehenden 31 Kanalzeitlagen geschrieben wurden, behandelt.

Nun wird das übertragen der Information vom Koppelfeld 24 zu den Leitungen und das Ausblenden der Daten beschrieben. In der Synchronisier- und Zwischenspeichereinheit 300 werden die Daten im 16 Bit-Format vom digitalen Koppelfeld 24 empfangen und die Synchronisiersignale werden ausgeblendet. Die 8 Bit-Sprache wird in der 8/16 Bit-Wandlereinheit 320 ausgeblendet und in den Synchronisierspeicher 310 geschrieben oder direkt in den Zwischenspeicher 308 abgelegt. Wenn die kanalgebundene Zeichengabe (CAS) oder Daten einem bestimmten Kanal zugeordnet werden, erfolgt das Ausblenden des Daten/Zeichengabenfeldes in der 8/16 Bit-Wandlereinheit 320 und das Feld wird in dem Zeichen/Datenspeicher 322 geschrieben. Werden Daten dem Tonbus 334 zugeordnet und im Tonzwischenspeicher 336 zwischengespeichert, dann erfolgt das Ausblenden des Tonbus-Datenfeldes in einer Synchronisier- und Daten/Tontrennungseinheit 314. Dieses Datenfeld wird dann in den Zeichen/Datenspeicher 322 eingeschrieben, welcher von der Adressenerzeugungs- und Schreib-/Lese-Steuereinheit 328 gesteuert wird. Die Daten werden gleichzeitig übertragen, d. h. daß innerhalb der nächsten 31 Kanalzeitlagen die gleichzeitig übertragenen Daten aus dem Zeichen/Datenspeicher 322 in ein 4 Bit-Feld gelesen und entweder zu einem 8 Bit-Feld kombiniert oder als 5 Bit-Feld (4 Bit und das gerade/ungerade Halbbyteanzeigebit) gelassen werden und daß sie mit dem Ausgangsbitstrom des Synchronisierspeichers 316 synchronisiert und auf dem Datenbus 304 übertragen werden (und anderen Leitungen in anderen digitalen Schnittstellen 22, die identisch der in Figur 6 abgebildeten Schnittstelle 22 sind). Die Zeitlage der PCM-Information des Koppelfeldes 24 kann, wie bereits angeführt, asynchron zur Phase aller anderen Daten sein. Dies ist ein charakteristisches Merkmal des Koppelfeldes 24, welches in der bereits erwähnten US-Patentschrift Nr. 4 201 891 von A. Lawrence et al beschrieben wird. Die kanalgebundene Zeichengabe/Daten-Einblendung, das Ausblenden und das Synchronisieren aller von den Leitungen und Zwischenleitungen kommender Daten, Sprache und Töne ist mit der PCM-Information, die von dem Koppelfeld 24 empfangen wird, synchronisiert.

Die Steuereinheit 329 besitzt verdrahtungsseitige Eingänge, Adresseneingänge für die Trennung von Leitungen/Zwischenleitungen und eine Schnittstelle zu einem Mikrocomputer, die Steuereinheit 34, die z. B. ein Intel 8086 Rechner sein kann. Ansonsten ist die Steuereinheit 329 entsprechend einer üblichen Mikrorechnerschnittstelle aufgebaut. Die Steuereinheit 329 verfügt über einen Weg, auf dem Steuerwörter von dem Mikrorechner in die Adressenerzeugungs- und Schreib/Lese-Steuereinheit 328 gelangen, um dort Wörter einschreiben oder löschen zu können und dadurch den Datenfluß zu verwalten, wodurch dem Mikrorechner das Lesen/Schreiben von Information in den Zeichen/Datenspeicher 322 und in den Tastenfeldspeicher 330 ermöglicht wird. Die als Standardschnittstelle zwischen dem Mikrorechner und dem restlichen Teil der digitalen Schnittstelle 22 ausgebildete Steuereinheit 329 enthält außerdem übliche Register/Zwischenspeicher, Decodierer, eine Adressenerzeugungseinheit, Erkennungsregister und eine Initialisierungssteuerung.

In vereinfachter Darstellung zeigt Figur 7 die 8/16 Bit Wandlereinheit 320, die über Zwischenspeicher 327, 329 an dem Zeichen/Datenspeicher 322 angeschlossen ist. Die Wandlereinheit 320 erlaubt eine 8/16 Bit-Wandlung, sowie das Ein- und Ausblenden von daten/kanalgebundenen Zeichen CAS. Die Wandlereinheit 320 setzt sich aus je einem 8 Bit- und 16-Bit Seriell/Parallel-Schieberegister 402, 404 und aus je einem 8-Bit- und 16-Bit Parallel/Seriell-Schieberegister 400, 406 zusammen, wodurch serielle Daten in parallele und parallele in serielle Daten, wie Figur 7 zeigt, gewandelt werden können. Damit die Daten im richtigen Kanal über die Schieberegister übertragen werden, sind zwei Zählerbausteine 420, 425 an den Zeichen/Datenspeicher 322 angeschlossen. Der Zählerbaustein 420 (Schreibadressen) und der Zählerbaustein 425 (Leseadressen) wird über die Leitung 426 rahmensynchron getaktet und zählt jeden Kanalzyklus (Kanal 0 bis Kanal 31) durch, so daß jeweils die für jeden Kanal entsprechende Schreib-/Lese-Adresse an den Zeichen/Datenspeicher 322 angelegt wird. Dabei sind die zwei Protokollbits P und das Fehlermeldungsbit N (vgl. Fig. 5) im Rahmen fest vorgegeben.

Die Figur 8 zeigt die Verschaltung der Tonbusse 230, die von einer Tonerzeugungseinheit 502 ausgehen und über eine hierarchische Anordnung von Zwischenspeichern 500 an eine Vielzahl von digitalen Schnittstellen 22A bis 22N geführt sind. Es sind zwei Tonbusse 2A1 und 2NM gezeigt, die die Zwischenspeicher 2A und 2N mit den digitalen Schnittstellen 22A1 und 22NM verbinden, wobei diese Schnittstellen weiterhin mit dem digitalen Koppelfeld 24 verknüpft sind. Der Tonbus 230 ist für einen phasenasynchronen pulscodemodulierten digitalen Datenstrom mit 16 Bit und 32 Kanälen entsprechend dem digitalen Koppelfeld 24, ausgelegt.

Die Tonerzeugungseinheit 502 besteht aus einem digitalen Tongenerator 504, von welchem digitale pulsecodemodulierte 8 kHz-Folgen als 8 Bit-Abtastwerte für verschiedene in der Vermittlung (Nebenstellenanlage) benützte Töne erzeugt werden. Diese Töne können in der Frequenz, Amplitude, Anzahl der Harmonischen und anderen Parametern durch die Steuereinheit 34 programmiert werden, wobei diese Steuerung des Tongenerators 504 über einen Steuerbus 506 erfolgt. In einer externen Schnittstelle 508 werden externe Programmquellen, wie z. B. Musik, Ansagen, usw., empfangen, gewandelt und in pulscodemodulierte 8 kHz-Datenströme als 8 Bit-Abtastwerte codiert. Eine Kanalzeitlageeinrichtung 510 empfängt von der digitalen Schnittstelle 22, welche von der Steuereinheit 34 gesteuert wird, 32 Kanäle mit 16 Bit pulscodemodulierten Daten und blendet die 8 kHz, 8 Bit-Abtastwerte des digitalen Tongenerators 504 und die Abtastwerte der externen Schnittstelle 508 in gekennzeichnete Kanäle des PCM-Rahmens im Sprachfeld. Die digitale Schnittstelle 22 empfängt, wie bereits beschrieben, das 5 Bit-Datenfeld aus dem Koppelfeld 24 und leitet diese PCM-Daten zu der Kanalzeitlageeinrichtung 510, in der diese Daten im Multiplexbetrieb mit den anderen 8 kHz, 8 Bit-Daten zu 16 Bit-Wörtern auf den Tonbus 230 geschaltet werden.

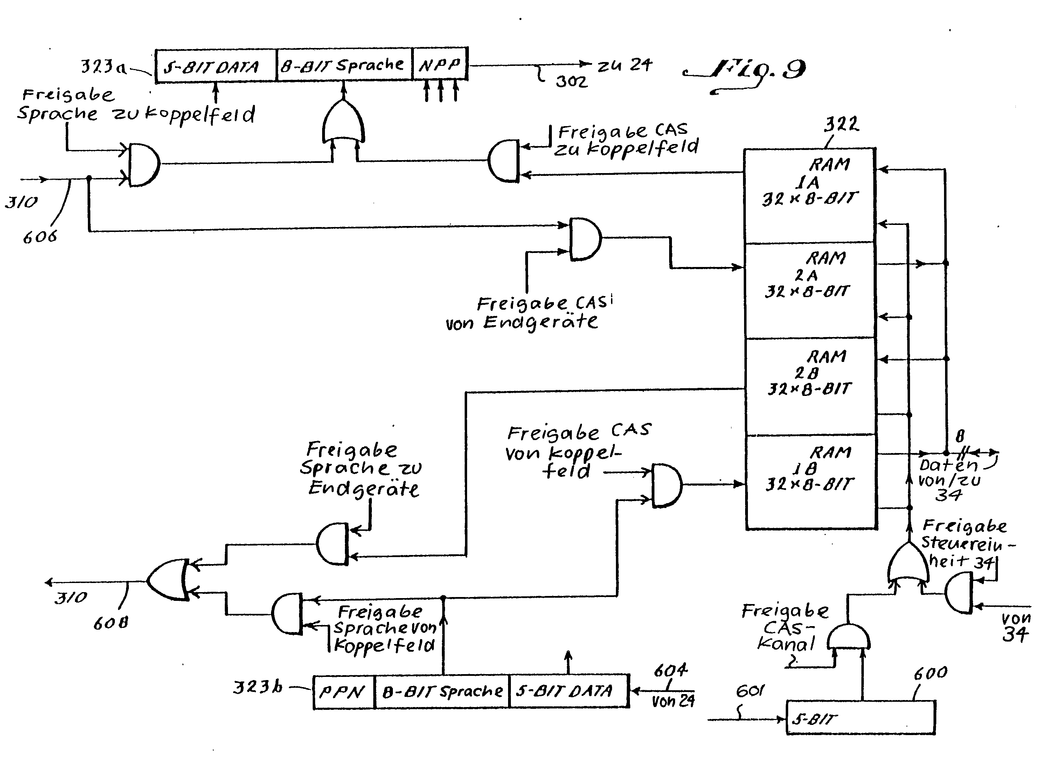

In der Figur 9 wird der Datenfluß von der kanalgebundenen Zeichengabe (CAS) im Sprachweg zwischen dem Zeichen/Datenspeicher 322 und der Seriell/Parallel-8/16-Bit-Wandlereinheit 320 veranschaulicht. Ein Paralleleingabe-, Seriellausgabe-Schieberegister 323a und ein Serielleingabe-, Parallelausgabe-Schieberegister 323b sind entsprechend den Schieberegistern 400 und 404 in Figur 7 aufgebaut. Die kanalgebundenen Zeichen (CAS) werden in aufeinander folgenden Rahmen des PCM-Datenflusses in einen Kanal inbandig eingeblendet und bilden eine wiederholende Folge, die in der Fernsprechtechnik als Mehrfachrahmen bekannt ist. Wenn der zugehörige Kanal von der digitalen Schnittstelle 22 gesendet oder zur Schnittstelle 22 übertragen wird, wird das Sprachfeld in oder aus dem Zeichen/Datenspeicher 322 geladen. Dann kann die Steuereinheit 34 den Zeichen/Datenspeicher 322 beschreiben oder auslesen, um Steuer- oder Signalisierinformation zu senden oder zu empfangen. Somit wird die Möglichkeit der Benutzung und Übertragung der kanalgebundenen Zeichengabe CAS zu dem Koppelfeld 24 oder zu den Endgeräten erreicht, wobei für die Signalisierung der gleiche Kanal benutzt werden kann.

Mit jedem Rahmen wird ein Zählerbaustein 600 mit z. B. 5 Bit, durch den Rahmentakt (von Leitung 601) inkrementiert, wodurch eine Mehrfachrahmenfolge von 32 Rahmen erzeugt wird, um den Empfang und das Übertragen von $8 \times 32 = 256$ Bit zur Signalisierung in jeder Richtung auf den Leitungen 602, 604, 606 und 608 zu ermöglichen. Wenn der CAS-Kanal nicht empfangen oder übertragen wird ist eine transparente Sprachübertragung möglich.

Der Zeichen/Datenspeicher 322 enthält vier Bereiche, die jeweils, z. B. 32 Speicherzellen zu je 8 Bit enthalten und wie folgt verwendet werden:

Bereich 1A: Zwischenspeicher für Daten von der Steuereinheit 34 zum Koppelfeld 24;
Bereich 1B: Zwischenspeicher für Daten vom Koppelfeld 24 zur Steuereinheit 34;
Bereich 2A: Zwischenspeicher für Daten von einer Fernsprechteilnehmerendeinrichtung über die Leitung 606 zur Steuereinheit 34;
Bereich 2B: Zwischenspeicher für Daten von der Steuereinheit 34 zu einer Fernsprechteilnehmerendeinrichtung über die Leitung 608.

Damit die Zeichen/Daten in die Zeichen/Datenbereiche, sowie in die Schieberegister 323a, 323b ein- bzw. ausgelesen werden können, sind eine Vielzahl von üblichen logischen Verknüpfungsgliedern vorgesehen, die in Abhängigkeit von den in der Zeichnung angegebenen Freigabebedingungen, das Durchhalten der Signale ermöglichen.

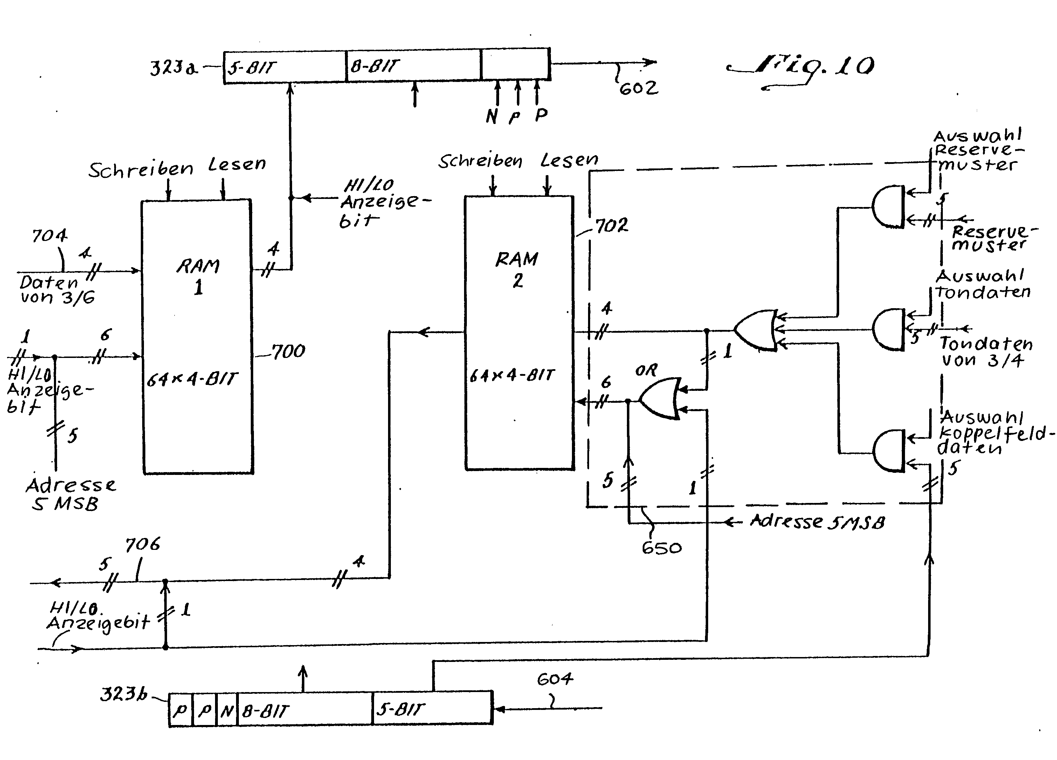

Das Ein- und Ausblenden von Halbbytedaten zwischen dem Zeichen/Datenspeicher 322 und einer Seriell/Parallel-Schieberegistereinheit 323 wird in Figur 10 beschrieben. Die ursprünglich 8 Bit-Daten werden in zwei $64 \times 4$ Bit-Speicher mit wahlfreiem Zugriff 700 und 702 gespeichert, wobei jedes abhängige Speicherzellenpaar die beiden Halbbytes eines 8 Bit-Bytes beinhalten. Dabei dient das niedrigstwertige Bit (LSB), welches die benachbarten Speicherzellen unterscheidet, als Halbbyteanzeige (HI/LO) für die geraden und ungeraden Halbbyte im Format C. Man kann den Datenspeicher des Zeichen/Datenspeichers 322 in zwei Bereiche identischer Größe aufteilen. Der erste Bereich bildet der Datenspeicher 700, der zum Zwischenspeichern und zum Umsetzen der Kanäle von den Endgeräten zum digitalen Koppelfeld 24 benutzt wird. Der zweite Bereich der Datenspeicher 702 wird zum Zwischenspeichern und zum Umsetzen der Kanäle zwischen den Datenquellen und einem Endgerät oder Endgeräten verwendet.

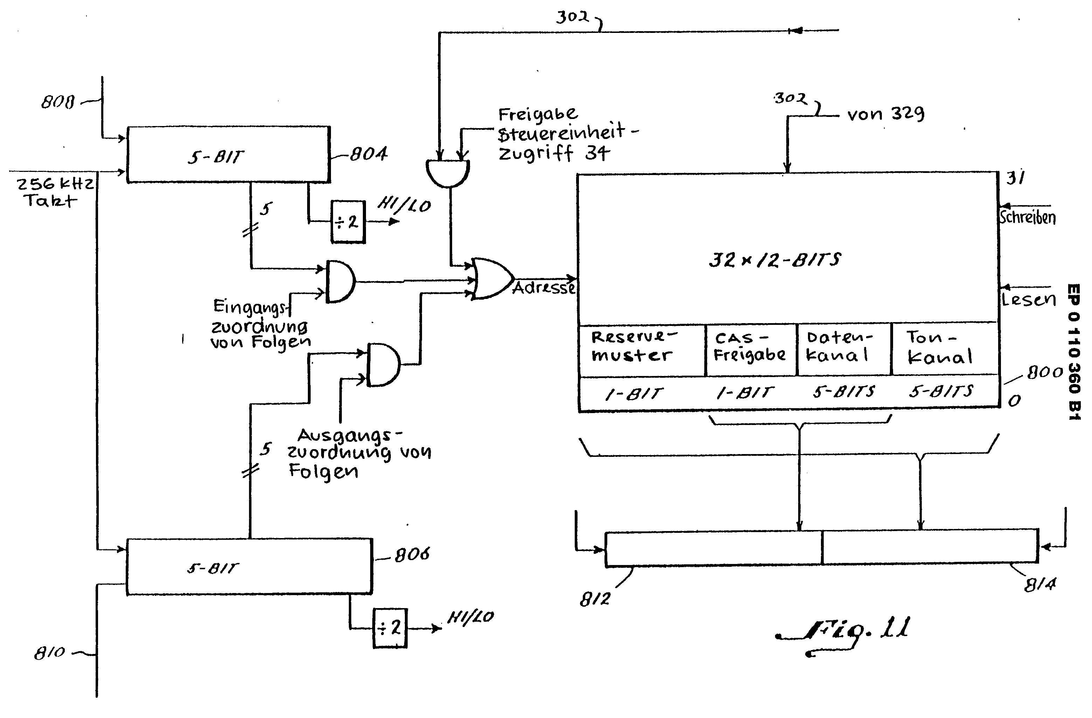

Als Schreibadresse erhält der Datenspeicher 700 die Adresse des Datenausgangskanales, der dem PCM-Kanal zugeordnet ist, der gerade zum Koppelfeld übertragen wird. Der Datenspeicherinhalt des Datenspeichers 700 für diese Adresse wird in das Schieberegister 323a geladen (4 Bit und 1 Bit HI/LO-Anzeige) und dann erfolgt das Verschieben des PCM-Kanales zu dem Koppelfeld 24. Die Nummer des von dem Endgerät empfangenen Datenkanals ergibt die Schreibadresse des Datenspeichers 700. Für den PCM-Kanal, der an das Koppelfeld 24 gesendet wird, erhält man die Daten aus der zugeordneten Speicherzelle im Datenspeicher 700, wobei die Adresse des Datenkanales aus dem in Figur 11 beschriebenen Zuordnungsspeicher 800 zu holen ist.

Die Nummer des Datenkanals, der zu einem Fernsprechteilnehmerendgerät gesendet wird, entspricht der Leseadresse des Datenspeichers 702. Seine Schreibadresse ergibt sich aus der Nummer des Dateneingangskanals, welcher aus dem Zuordnungsspeicher 800 durch Zugriff auf die Speicherzelle geholt wird, die durch die Kanalnummer des vom Koppelfeld 24 empfangenen PCM-Kanales adressiert ist. Somit wird der Datenkanal auf der Leitung 704 dem Koppelfeld 24 über die Leitung 602 zugeordnet und in umgekehrter Richtung wird der Datenkanal von dem Koppelfeld 24 über die Leitung 602 zu dem Datenkanal auf der Leitung 706 zugeordnet.

Außerdem werden die Daten zweier anderer Datenquellen in den Datenspeicher 702 geschrieben. Diese Daten werden als Ergebnis des Inhaltes des Zuordnungsspeichers 800 ausgewählt. Eine dieser Datenquellen enthält Tondaten und die anderen Reservemuster, welche dann benutzt werden, wenn weder das Koppelfeld 24 noch Tondaten an das Datenendgerät geschaltet sind. Für das Halbbyteanzeigebit (HI/LO) wird das niedrigstwertige Bit (LSB) der Schreib/Leseadresse für die Datenspeicher 700 und 702 benutzt. Die verschiedenen Nachrichtensignale werden über eine Logikeinheit 650, die im Wesentlichen aus üblichen logischen Verknüpfungsgliedern besteht, dem Datenspeicher 702 zugeführt.

In der Figur 11 wird die Adressenerzeugungs- und Schreib/Lese-Steuereinheit 328 veranschaulicht. Der Zuordnungsspeicher 800 besteht aus 32 × 12 Bit-Speicherzellen und pro Kanalzeitlage wird zweimal auf ihn zugegriffen, einmal für den Kanal, der zum Koppelfeld 24 gesendet und einmal für den Kanal, der von dem Koppelfeld 24 empfangen wird. Dabei hat jede Richtung ihren eigenen Adressenzähler 804 und 806, welche durch jedes zugehörige Rahmensynchronisationssignal, das über die Leitungen 808 und 810 an die Adressenzähler 804, 806 angeschlossen ist, zurückgesetzt wird. Als ein Ergebnis eines jeden Lesezugriffs auf den Zuordnungsspeicher 800, werden die gelesenen Daten in einen Zwischenspeicher 812 und 814 gespeichert, wobei je ein Zwischenspeicher für die Eingangs- bzw. Ausgangsrichtung des PCM-Datenflusses vorgesehen ist.

Außerdem hat die Steuereinheit 34 über die Logiksteuereinheit 329, welche die zugeordneten Muster in den Zuordnungsspeicher 800 schreibt und diese Muster für Testzwecke auslesen kann, die Möglichkeit des Schreib/Lesezugriffs auf den Zuordnungsspeicher 800. Da der Zuordnungsspeicher 800 eine größere Bitbreite (größer 8 Bit) aufweist, kann er in zweierlei Weise adressiert werden. Einmal durch eine 12 Bit breite Adressierung (32 Speicherzellen zu je 12 Bit) für die Kanalzuordnung und außerdem für eine kleiner Steuerdatenbreite, z. B. 8 Bit, für den Zugriff durch die Steuereinheit 34. Die 12 Bit-Daten des Zuordnungsspeichers 800 werden in vorteilhafter Weise wie folgt belegt :

1 Bit — Auswahl der Reservemuster zum Datenspeicher 702
1 Bit — Auswahl des Kanales für die kanalgebundene Zeichengabe (CAS)
5 Bit — zugeordneter Datenkanal
5 Bit — zugeordneter Tonkanal.

Eine Kanalzuordnung des Sprachbusses 302 zu dem Koppelfeld 24 über die digitale Schnittstelle 22 kann in ähnlicher Art und Weise, wie mittels der Figuren 9, 10 und 11 erläutert wurde, und durch eine Erweiterung der Bitbreite des Zuordnungsspeichers 800, für ein Feld der Kanalnummern des Sprachbusses, durchgeführt werden. Wenn gerade ein Kanal des Koppelfeldes zu dem Koppelfeld über die Leitung 602 übertragen wird, wird diese Adresse der Kanalnummer, die durch den Adressenzähler 804 zugeteilt wurde, zum Lesen des Zuordnungsspeichers 800 benutzt, wodurch die gelesenen Daten aus dem Zuordnungsspeicher 800 in den Zwischenspeicher 812 geladen werden.

Dieses Steuerwort im Zwischenspeicher 812 enthält ein Zeichengabe/Freigabebit. Durch Setzen dieses Bits wird das Sprachfeld im Schieberegister 323a von dem Zwischenspeicherbereich 1A des Zeichenspeichers 322 geladen, auf den durch die Mehrfachrahmenadresse, die durch den Mehrfachrahmenzähler 600 zugeteilt wird, zugegriffen wurde. Die kanalgebundene Zeichengabe (CAS) wird auch von dem 8 Bit-Sprachfeld des Endgerätes von Leitung 606, durch die Vielfachrahmenzähleradresse, in den Zwischenspeicherbereich 2A des Zeichenspeichers 322 geladen. Das Datenfeld im Datenspeicher 700 wird in das Schieberegister 323a geladen, wobei die Adresse des Datenspeichers 700 durch die Adresse der Datenkanalnummer des Zuordnungsspeichers 800, welche vorher in den Zwischenspeicher 812 geladen wurde, festgelegt ist.

Wenn ein Kanal des Koppelfeldes 24 über die Leitung 604 im Schieberegister 323b empfangen wird, wird diese Adresse der Kanalnummer, welche durch den Adressenzähler 806 zugeteilt wurde, als Adresse zum Lesen des Zuordnungsspeicher 800 benutzt, wobei der adressierte Inhalt in den Zwischenspeicher 814 geladen wird. Wenn das Zeichengabe/Freigabebit gesetzt ist, wird die kanalgebundene Zeichengabe (CAS) von dem empfangenen Sprachfeld im Schieberegister 323b in den Zwischenspeicherbereich 1B des Zeichenspeichers 324 geladen, und außerdem wird die kanalgebundene Zeichengabe von dem Zwischenspeicherbereich 2B des Zeichenspeichers 322 im Sprachfeld über die Leitung 608 zu dem Fernsprechteilnehmerendgerät gesendet. Die Adresse des Zeichenspeichers 322 wird durch den Mehrfachrahmenzähler 600 bestimmt. Der Datenspeicher 702 wird mit dem 5 Bit-Feld, das das Schieberegister 323b von dem Koppelfeld 24 empfangen hat, geladen, wenn die Adresse des zugeordneten Tondatenkanales im Zwischenspeicher 814 gleich Null und das Reservemusterbit im Zwischenspeicher 814 nicht gesetzt ist. Wenn dagegen die Adresse des Tondatenkanales im Zwischenspeicher 814 ungleich Null ist, werden die Tondaten aus einer Speicherzelle gelesen und durch ein Feld adressiert, das sich in der Synchronisier- und Datentrennungseinheit 314 befindet, und diese Daten werden in den Datenspeicher 702 geladen, dessen Speicherzellen durch das zuvor in den Zwischenspeicher 814 geladene Datenkanalfeld adressiert sind. Wenn das Reservemusterbit gesetzt ist, wird ein Reservemuster in die zugeordnete Speicherzelle im Datenspeicher 702 übertragen. Dies überschreibt den vorliegenden Inhalt des Zwischenspeichers 814.

Die Adressenerzeugungs- und Schreib/Lesesteuereinheit 328 enthält auch Kanalzeitlagen, die die verschiedenen Schreib/Lesezugriffe in festen Zeitlagen steuert, welche mit dem Koppelfeldrahmen, der Kanalrahmenzeitlage und mit den 4.096 MHz-Takt synchronisiert sind.

Da die vorliegende Erfindung ein bevorzugtes Ausführungsbeispiel beschreibt, ist es natürlich selbstverständlich, daß auch solche Ausführungen, die den Fachmann durch Anwenden der Erfindung offensichtlich werden, hier enthalten sind und durch die Ansprüche zum Ausdruck gebracht werden. Zum Beispiel können viele Varianten der Datenübertragung mit der vorliegenden Erfindung erreicht werden, in dem verschiedene bekannte Übertragungsschnittstellen benutzt werden. Dies beinhaltet die Verbindung von einzelnen Endgeräten an einzelne Endgeräte, die Übertragung von Daten und Sprache oder nur Datenübertragung. Für den Fall der « nur » Datenübertragung können die Daten mit 64 Kbit/s im Vollduplexbetrieb im Sprachfeld übertragen werden. Außerdem können Daten mit Sprachbandbreite im Sprachfeld übertragen werden. Wenn Sprache und Daten gleichzeitig übertragen werden, können die Daten mit 32 Kbit/s und die Sprache mit 64 Kbit/s im Vollduplexbetrieb unter Benutzung von 5 Reservebits im SPATA-Format oder wenn 32 Kbit/s Sprache codiert wird, können 5- und 8-Bitfelder so wiederholt werden, daß 64 Kbit/s Daten im Vollduplexbetrieb gesendet werden können. Für eine Multiendgeräteanordnung (größer gleich 2 Endgeräte), die mit oder ohne gemeinsamen Zugriff auf das Datenverarbeitungssystem sind, können die Daten im Konferenzmodus übertragen werden, wobei die folgenden Möglichkeiten bestehen. Die Konferenzeinheit blendet Daten aus, ermöglicht eine Speichervermittlung, Richtungslenkung/Vermittlung oder ein Zugriff/Verfahren für ein gemeinsames Datenvermittlungssystem, so daß alle Daten an alle Endgeräte zurückgesendet werden können oder daß eine Vermittlung der Nachrichten zwischen den Endgeräten ermöglicht wird. Es sind Vollduplexwege zwischen jedem Endgerät und der Konferenzeinheit eingerichtet.

Bei einer Multiendgeräteanordnung ohne Konferenzmodus (ohne oder mit gemeinsamem Zugriff auf ein Datenverarbeitungssystem) können Daten zwischen zwei Endgeräten übertragen werden, wobei eine direkte Sprach- und Datenverbindung über ein gemeinsames Datenverarbeitungssystem besteht, so daß jedes Endgerät die gleichen Daten von dem Datenverarbeitungssystem zurückgesendet bekommt oder abwechselnd so, daß jedes Endgerät ein 16 Bit-Kanal (unter Benutzung einer üblichen Übertragungseinrichtung), der Sprache und Daten kombiniert enthält, zu den anderen Endgeräten auf der einen Seite oder zu dem gemeinsamen Datenverarbeitungssystem auf der anderen Seite überträgt, und daß die gemeinsamen Daten über den Tonbus zurückkommen, wodurch eine Übermittlungs von Nachrichten durch Zugriff auf 30 Kanäle zu allen Endgeräten erlaubt wird. Zwei Endgeräte mit direkter Sprach- und Datenverbindung über die Übertragungseinrichtung können mit einer oder mehreren Datenverarbeitungssystemen so verbunden werden, daß jedes Endgerät verschiede Daten zurückgesendet bekommt.

## Patentansprüche

1. Schaltungsanordnung zum Zusammensetzen und Trennen von Sprache und Daten bei der Übertragung über ein digitales Koppelfeld (24), insbesondere für Nebenstellenanlagen (10), wobei zwei oder mehrere Endstellen, die sich aus einer Vielzahl von Fernsprechteilnehmerendeinrichtungen (12) und Datenendeinrichtungen (14) zusammensetzen können, und ein Datenverarbeitungssystem (208) an das digitale Koppelfeld (24) angeschlossen sind, dadurch gekennzeichnet, daß die Schaltungsanordnung je Endstelle eine Übertragungsschnittstelleneinheit (20) aufweist, die je über eine digitale Schnittstelle (22) mit dem digitalen Koppelfeld (24) und je mit einer Steuereinheit (34) verbunden ist, daß das Datenverarbeitungssystem (208) über eine weitere digitale Schnittstelle (210) an das Koppelfeld (24) geschaltet ist, daß in der Übertragungsschnittstelleneinheit (20) empfangene N-Bit Datenwörter, als Halbbyte-Datenwörter, denen ein Halbbyteanzeigebit (HI/LO) hinzugefügt ist, in einen Zeichen/Datenspeicher (322) der digitalen Schnittstelle (22) geschrieben werden, daß in der Übertragungsschnittstelleneinheit (20) empfangene digitale Sprache und ein erstes aus dem Zeichen/Datenspeicher (322) ausgelesenes Halbbyte-Datenwort in der digitalen Schnittstelle (22) in ein Mehrbitwort eines Kanales innerhalb eines Vielkanalrahmens eingeblendet und mit den Rahmenzeitlagen des digitalen Koppelfeldes synchronisiert wird, daß je ein weiteres Halbbyte-Datenwort und digitale Sprache je in den gleichen Kanal eines folgenden Rahmens eingeblendet und synchronisiert werden, und daß diese Rahmen, die Kanäle mit Sprache und Daten enthalten, über das digitale Koppelfeld (24) zu allen Endstellen und zu dem Datenverarbeitungssystem (208) übertragen werden, wobei die Sprache und die Daten in den digitalen Schnittstellen (22) ausgeblendet werden.

2. Schaltungsanordnung nach Anspruch 1, dadurch gekennzeichnet, daß aus jedem N-Bit Datenwort zwei Halbbyte-Datenwörter abgeleitet werden und daß das erste Halbbyte-Datenwort zusammen mit digitaler Sprache in einen Rahmen mit ungerader Nummer und daß das zweite Halbbyte-Datenwort zusammen mit digitaler Sprache in einen Rahmen mit gerader Nummer eingeblendet wird.

3. Schaltungsanordnung nach Anspruch 1 oder 2, dadurch gekennzeichnet, daß die Mehrbitwörter eines Kanals als 16 Bit-PCM-Wörter dargestellt werden, wobei 8 Bit für digitale Sprache, wenigstens 5 Bit für digitale Information, wie digitale Datenwörter und die restlichen Bits als Protokollbits verwendet werden.

4. Schaltungsanordnung nach einem der vorhergehenden Ansprüche, dadurch gekennzeichnet, daß

10

die Datenwörter aus 8 Bit bestehen, die in zwei Halbbyte-Datenwörter zu je 4 Bit, denen je ein 5-tes Bit mit unterschiedlicher digitaler Information als Halbbyteanzeigebit hinzugefügt ist, aufgeteilt sind.

5. Schaltungsanordnung nach einem der vorhergehenden Ansprüche, dadurch gekennzeichnet, daß eine Wandlereinheit (320) der digitalen Schnittstelle (22) zum Ein- und Ausblenden der Halbbyte-Datenwörter und der Sprachbits Seriell/Parallel-Schieberegister (402, 404) und Parallel/Seriell-Schieberegister (400, 406) beeinhaltet, daß die ausgeblendeten Halbbyte-Datenwörter in den Zeichen/Datenspeicher (322) eingeschrieben und in einem Synchronisierspeicher (316), zum Übertragen über einen Datenbus (304) zu den Endstellen, synchronisiert werden, daß die ausgeblendeten Sprachbits in einem weiteren Synchronisierspeicher (310), zum Übertragen über einen Sprachbus (302) zu den Endstellen, synchronisiert werden, daß eine Adressenerzeugungs- und Schreib/Lesesteuereinheit (328) die Schreib/Lesevorgänge steuert und die entsprechenden Adressen erzeugt und daß diese Vorgänge bidirektional ablaufen.

6. Schaltungsanordnung nach einem der vorhergehenden Ansprüche, dadurch gekennzeichnet, daß die digitalen Schnittstellen (22, 210) an ein Tonbus (230), der als Vielkanal-Zeitmultiplexleitung ausgeführt ist, angeschlossen sind, und daß N-Bit-Datenwörter, die als Halbbyte-Datenwörter mit digitalen Tondaten in einem Kanal zusammengesetzt werden, über den Tonbus (230) zu allen Endstellen und zu dem Datenverarbeitungssystem (208) übertragen werden.

7. Schaltungsanordnung nach einem der vorhergehenden Ansprüche, dadurch gekennzeichnet, daß eine Konferenzeinheit (262), die an die digitale Schnittstelle (210) angeschlossen ist, eine gleichzeitige Übertragung von digitalen Datenwörter aus dem Datenverarbeitungssystem (208) zu den Endstellen ermöglicht.

8. Schaltungsanordnung nach Anspruch 7, dadurch gekennzeichnet, daß die Endstellen auf das Datenverarbeitungssystem (208) über den Tonbus (230) gleichzeitig zugreifen können, daß die gleiche Information — digitale Datenwörter — von dem Datenverarbeitungssystem (208) zu allen Endstellen und daß verschiedene Information gleichzeitig zu verschiedenen Endstellen in verschiedenen Kanälen über den Tonbus (230) übertragen werden kann.

9. Schaltungsanordnung nach einem der vorhergehenden Ansprüche, dadurch gekennzeichnet, daß die Kanäle eines jeden übertragenen Rahmens alle Halbbyte-Datenwörter und digitale Sprachproben enthalten, die während der vorhergehenden Anzahl von Kanalzeitlagen eines jeden Rahmens eingeblendet wurden, und daß diese Anzahl der Anzahl der Kanäle eines Rahmens entspricht.

## Claims

1. A circuit arrangement for combining and separating speech and data in transmission via a digital switching network (24), especially for PABXs (10), wherein two or more terminal stations, which may be composed of a multiplicity of telephone subscriber terminal devices (12) and data terminal devices (14), and a data-processing system (208) are connected to the digital switching network (24), characterized in that the circuit arrangement comprises for each terminal station a transmission interface unit (20) which in each case is connected via a digital interface (22) to the digital switching network (24) and in each case to a control unit (34), that the data-processing system (208) is connected via a further digital interface (210) to the switching network (24), that N-bit data words which are received in the transmission interface unit (20) are written as half-byte data words, to which a half-byte indication bit (HI/LO) is added, into a character/data memory (322) of the digital interface (22), that digital speech received in the transmission interface unit (20) and a first half-byte data word read out from the character/data memory (322) is inserted, in the digital interface (22), into a multi-bit word of a channel within a multi-channel frame and synchronized with the frame-time positions of the digital switching network, that in each case a further half-byte data word and digital speech are inserted into and synchronized in the same channel of a subsequent frame and that these frames, which contain channels with speech and data, are transmitted via the digital switching network (24) to all terminal stations and to the data-processing system (208), the speech and the data being extracted in the digital interfaces (22).

2. A circuit arrangement as claimed in Claim 1, characterized in that two half-byte data words are derived from each N-bit data word and that the first half-byte data word together with digital speech is inserted in a frame with an odd number and that the second half-byte data word is inserted together with digital speech in a frame with an even number.

3. A circuit arrangement as claimed in Claim 1 or 2, characterized in that the multi-bit words of a channel are presented as 16-bit PCM words, 8 bits being used for digital speech, at least 5 bits for digital information, as digital data words, and the remaining bits as protocol bits.

4. A circuit arrangement in accordance with any one of the preceding claims, characterized in that the data words consist of 8 bits which are divided up into two half-byte data words of 4 bits each, to each of which a 5th bit with different digital information is added as a half-byte indication bit.

5. A circuit arrangement as claimed in any one of the preceding claims, characterized in that a converter unit (320) of the digital interface (22) contains series/parallel shift registers (402, 404) and parallel/serial shift registers (400, 406) for insertion and extraction of the half-byte data words and the speech bits, that the extracted half-byte data words are written into the character/data memory (322) and synchronized in a synchronization memory (316) for transmission via a data bus (304) to the terminal stations, that the extracted speech bits are synchronized in a further synchronization memory (310) for transmission via a speech bus (302) to the terminal stations, that an address generation and write/read control unit (328) controls the writing/reading processes and generates the corresponding addresses and that these processes take place bidirectionally.

6. A circuit arrangement as claimed in any one of the preceding claims, characterized in that the digital interfaces (22, 210) are connected to an audio bus (230) which is constructed as a multi-channel time-multiplex line and that N-bit data words which are combined as half-byte data words with digital sound data in a channel are transmitted via the audio bus (230) to all terminal stations and to the data-prooessing system (208).

7. A circuit arrangement as claimed in any one of the preceding claims, characterized in that a conference unit (262), which is connected to the digital interface (210), permits simultaneous transmission of digital data words from the data-processing system (208) to the terminal stations.

8. A circuit arrangement as claimed in Claim 7, characterized in that the terminal stations can simultaneously have access to the data-processing system (208) via the audio bus (230), that the same information — digital data words — can be transmitted from the data-processing system (208) to all terminal stations and that different items of information can be simultaneously transmitted to different terminal stations in different channels via the audio bus (230).

9. A circuit arrangement as claimed in any one of the preceding claims, characterized in that the channels of each transmitted frame contain all half-byte data words and digital speech samples which have been inserted during the preceding number of channel time positions of each frame and that this number corresponds to the number of channels of a frame.

## Revendications

1. Dispositif de circuit pour la combinaison et la séparation de données lors de la transmission par l'intermédiaire d'un champ de couplage numérique destiné en particulier à des installations (10) de postes secondaires, deux ou plusieurs postes terminaux qui peuvent se composer de plusieurs dispositifs terminaux d'abonné au téléphone (12) et de terminaux de données (14), et un système de traitement de données (208) étant raccordés au champ de couplage numérique (24), caractérisé en ce que le dispositif de circuit présente pour chaque poste terminal une unité d'interface de transmission (20) qui est reliée par l'intermédiaire d'une interface numérique (22) au champ de couplage numérique (24) et à une unité de commande (34), que le système de traitement de données (208) est raccordé au champ de couplage (24) par l'intermédiaire d'une autre interface numérique (210) que les mots de données à N-bits reçus dans l'unité d'interface de transmission (20), sous forme de mots de données constitués par des demi-bytes, auxquels est ajouté un bit indicateur (HI/LO) constituant un demi-byte, sont inscrits dans une mémoire (322) de signes/données à l'interface numérique (22), que la parole numérique reçue dans l'unité d'interface de transmission (20) et un premier mot de données sous forme de demi-byte extraits de la mémoire (322) de signes et de données est mixé en un mot à plusieurs bits d'un canal appartenant à un bloc de canaux multiples et est synchronisé avec les situations temporelles des blocs du champ de couplage numérique, qu'un autre mot de données sous la forme d'un demi-byte et de la parole numérique sont chacun mixés et synchronisés dans le même canal d'un bloc suivant et que ces blocs qui contiennent des canaux comportant de la parole et des données sont transmis par l'intermédiaire du champ de couplage (24) à tous les terminaux et au système de traitement de données (208), la parole et les données étant démixées dans les interfaces numériques (22).

2. Dispositif de circuit selon la revendication 1, caractérisé en ce qu'à partir de chaque mot de données à N-bits, on fait dériver deux modes de données constitués par des demi-bytes et que le premier mot de données en demi-byte est mixé en même temps que de la parole dans un bloc comportant un numéro pair, et que le deuxième mot de données en demi-byte est mixé avec de la parole numérique dans un bloc comportant un numéro impair.

3. Dispositif de circuit selon les revendications 1 ou 2, caractérisé en ce que les mots à plusieurs bits d'un canal se présentent sous la forme de mots modulés par impulsions codées (PCM) à 16 bits, 8 bits étant utilisés pour la parole numérique, au moins 5 bits l'étant pour l'information numérique telle que des mots de données numériques et les bits restants étant utilisés en tant que bits de protocole.

4. Dispositif de circuit selon une des revendications précédentes, caractérisé en ce que les mots de données sont constitués par 8 bits, qui sont divisés en deux mots de données constitués eux-mêmes par des demi-bytes de 4 bits, à chacun desquels est ajouté un cinquième bit comportant une information numérique différente servant de bit indicatif formant un demi-byte.

5. Dispositif de circuit selon une des revendications précédentes, caractérisé en ce qu'une unité de conversion (320) de l'interface numérique (22) contient des registres de décalage (402, 404) série/parallèle et ces registres de décalage (400, 406) parallèles/série destinés au mixage et au démixage des mots de données en demi-byte, que les mots de données en demi-byte démixés sont inscrits dans la mémoire (322) de signes/données et synchronisés dans une mémoire de synchronisation (306) en vue de la transmission aux postes de terminaux par l'intermédiaire d'un bus (304) de données, que les bits de parole démixés sont synchronisés dans une autre mémoire de synchronisation (310) en vue de la transmission aux postes de terminaux par l'intermédiaire d'un bus (302) de parole, qu'une unité (328) de création d'adresses et d'écriture/lecture commande les opérations d'écriture/lecture et que ces opérations se déroulent de façon bidirectionnelle.

6. Dispositif de circuit selon une des revendications précédentes, caractérisé en ce que les interfaces numériques (22, 210) sont raccordées à un bus audio (230) qui est réalisé sous la forme d'une ligne multiplexe temporelle à plusieurs canaux et que les mots de données à N-bits qui sont combinés dans un canal sous forme de données en demi-byte avec des données audio, sont transmis par l'intermédiaire du bus audio (230) à tous les postes de terminaux et au système de traitement de données (208).

7. Dispositif de circuit selon l'une des revendications précédentes, caractérisé en ce qu'une unité de conférence (262) qui est raccordée à une interface numérique (210) permet une transmission simultanée des mots de données numériques provenant du système de traitement de données (208) à tous les postes de terminaux.

8. Dispositif de circuit selon la revendication 7, caractérisé en ce que les postes de terminaux peuvent avoir accès simultanément au système de traitement de données (208) par l'intermédiaire du bus audio (230) que la même information sous forme de mots de données numériques d'information peut être transmise à partir du système de traitement de données (208) à tous les postes de terminaux et qu'une information différente peut être transmise simultanément à des postes de terminaux différents dans des canaux différents par l'intermédiaire du bus audio (230).

9. Dispositif de circuit selon une des revendications précédentes, caractérisé en ce que les canaux de chaque bloc transmis contiennent tous les mots de données en demi-byte et des lots de parole numérique, qui ont été mixés pendant le passage du nombre des situations temporelles de canal de chaque bloc, et que ce nombre correspond au nombre des canaux d'un bloc.

Fig. 1

Fig. 2

Fig. 3

2

Fig. 4

*Fig. 5*

Fig. 6

Fig. 7

Fig. 8

EP 0 110 360 B1

Fig. 9

Fig. 10

Fig. 11

EP 0 110 360 B1